# EUROPEAN PATENT APPLICATION

(11) **EP 3 078 956 A1**
(43) Date of publication of application: **12.10.2016**
(21) Application number: 14868200.8
(22) Date of filing: 28.11.2014
(51) Int. Cl.: G01N 1/10, G01N 33/48

(54) **SEPARATION UNIT, SEPARATION METHOD, FLUID DEVICE, AND COMPOSITE FLUID DEVICE AND KIT**

(30) Priority: 03.12.2013 JP 2013249986
(71) Applicant: The University of Tokyo, Tokyo 113-8654 (JP); Nikon Corporation, Tokyo 108-6290 (JP)
(72) Inventor: ICHIKI Takanori, Tokyo 113-8654 (JP); TAKARADA Hiromi, Tokyo 113-8654 (JP); SUZUKI Kuno, Tokyo 108-6290 (JP)
(74) Representative: Hoffmann Eitle
(86) International application number: PCT/JP2014/081598
(87) International publication number: WO 2015/083646

(57) **Abstract**

The present invention provides a separation unit, a separation method, a fluid device, a composite fluid device and kit which are able to obtain a target analyte from a sample including the analyte. The separation unit (4) of the present invention is characterized in being provided with a filter for selectively filtering analyte from a sample, and a structural material arranged to be movable to the secondary side of the filter so as to promote filtration while maintaining contact with the analyte filtrated by the filter.

## Description

### TECHNICAL FIELD

The present invention relates to a separation unit, a separation method, a fluid device, a composite fluid device and a kit.

The present application claims priority on the basis of Japanese Patent Application No. 2013-249986, filed in Japan on December 3, 2013, the contents of which are incorporated herein by reference.

### BACKGROUND ART

Conventionally, as a device provided with a filter for obtaining plasma from blood by separating blood cells, apparatuses described in Patent Documents 1 and 2 have been known.

### Prior Art Documents

### Patent Documents

Patent Document 1: Published Japanese Translation No. 2012-530256 of the PCT International Patent Publication
Patent Document 2: Published Japanese Translation No. H10-505542 of the PCT International Patent Publication

### DISCLOSURE OF THE INVENTION

### Problems to be Solved by the Invention

In the apparatus described in Patent Document 1, the apparatus has a configuration in which relatively rigid flat plate is arranged on the lower surface of the filter in a fixed state, and plasma soaks out to the gap between the lower surface of the filter and the flat plate. However, in this case, it is necessary to pressurize by pushing air from the upper surface side of the filter to facilitate filtration. There is a risk that the blood cells are hemolyzed by the pressure, and a portion of the blood cells are mixed into the plasma. Furthermore, since flow passage resistance is large when pulling out the filtered plasma from the gap to the outside of the apparatus, it is troublesome and time-consuming for recovering the plasma.

In the apparatus described in Patent Document 2, the apparatus has a structure in which the filter is arranged between a pair of flexible sheets in a fixed state, and plasma immerses out to the gaps between a pair of upper and lower surfaces of the filter and each of the sheets. Since the flexible sheets are used, the benefits are touted in which the sheets can be placed in the apparatus in a state of being folded or wrapped around. However, there is a problem similar to the apparatus of Patent Document 1.

The present invention has been made in view of the above circumstances, and the object of the present invention is to provide a separation unit, a separation method, a fluid device, a composite fluid device and a kit capable of obtaining an analyte of interest from the sample containing the analyte.

### Means for Solving the Problems

(1) A separation unit comprising a filter for selectively filtering an analyte from a sample, and a structural material movably arranged on a secondary side of the filter so that filtration is promoted while maintaining contact with the analyte to be filtered from the filter.
(2) A fluid device comprising an inlet for sample introduction, a filter for selectively filtering an analyte from a sample, a structural material movably arranged on a secondary side of the filter so that filtration is promoted while maintaining contact with the analyte to be filtered from the filter, and an outlet for a discharging sample, communicating with a gap between the filter and the structural material.
(3) A separation method comprising using the separation unit according to (1) or the fluid device according to (2), and obtaining a liquid component by separating a solid component from a sample containing the liquid component and the solid component.
(4) A separation method comprising a step of supplying a sample containing a liquid component and a solid component to a primary side of a filter for selectively filtering the liquid component from the sample, and a step comprising having the liquid component soaked into an inside of the filter by capillary action, and contacting the liquid component that has reached a secondary side of the filter with a structural material which is in contact with or close to the secondary side of the filter, expanding a volume of a gap between the filter and the structural material by pressing down the structural material by the liquid component flowed out from the secondary side during gradually filtering the sample supplied from the primary side by the filter, and continuing the capillary action by the pressed down structural material via a filtered liquid component.
(5) A kit comprising the separation unit according to (1), and a liquid contained in a filter provided in the separation unit.
(6) A composite fluid device for detecting a biomolecule contained in an exosome in plasma obtained from a sample containing blood by separating blood cells using the separating unit according to (1) or the fluid device according to (2) comprising a preprocessing portion having the separation unit or the fluid device, an exosome purification portion having a layer modified with a compound having a hydrophobic chain and a hydrophilic chain, and a biomolecule detection portion.
(7) A separation unit comprising a filter which selectively filtrates a liquid component from a sample containing a liquid component and a solid component, and a structural material which is in contact with or close to a secondary side of the filter, the liquid component being soaked into an inside of the filter by capillary action when the sample is supplied to a primary side, the structural material being in contact with the liquid component reached an secondary side of the filter, the filter being pressed down by the liquid component flowing out of the secondary side as the filter filtrates the sample, a volume of a gap between the filter and the structural material is expanded, and the capillary action via a filtered liquid component being continued.

### Effects of the Invention

According to the present invention, it is possible to obtain an analyte in which contamination of unnecessary foreign substances is reduced.

### Brief Description of the Drawings

FIG. 1 is a perspective view showing an example of an embodiment of a fluid device according to the present invention.
FIG. 2 is a perspective view showing an example of an upper plate of an embodiment of the fluid device according to the present invention.
FIG. 3 is a perspective view showing an example of a lower plate of an embodiment of the fluid device according to the present invention.
FIG. 4 is a separated perspective view showing a state of assembling an example of an embodiment of the fluid device according to the present invention.
FIG. 5 is a sectional view showing an example of an embodiment of the fluid device according to the present invention.
FIG. 6A is a sectional view showing a state in which a sample is introduced to an example of an embodiment of the fluid device according to the present embodiment.
FIG. 6B is a sectional view showing a state in which a sample is filtrated in an example of an embodiment of the fluid device according to the present embodiment.
FIG. 6C is a sectional view showing a state in which a filtered sample is discharged in an example of an embodiment of the fluid device according to the present embodiment.
FIG. 7A is a sectional view showing a state in which the liquid component came down by gravity toward the opening from the top of the capillary in the present embodiment.
FIG. 7B is a sectional view showing a surface tension on the liquid component at the opening of the capillary in the present embodiment.
FIG. 8 is a sectional view (left) showing a state of the liquid component at the opening of the capillary and a sectional view (right) showing a state of the flat plate being in contact to the liquid component at the opening in the present embodiment.
FIG. 9 is a sectional view (left) showing a state in which the flexible thin film material is contacted to the liquid component at the opening of the capillary (left), and a sectional view (right) showing a state in which the flexible thin film material is moved down from the opening in the present embodiment.
FIG. 10 is a sectional view showing a displacement amount L of the liquid component at the opening of the capillary, with the flexible thin film material lowered in the present embodiment.
FIG. 11 is a perspective view showing a modification of the upper plate of the embodiment of the fluid device according to the present invention.
FIG. 12 is a perspective view showing a modification of the lower plate of the embodiment of the fluid device according to the present invention.
FIG. 13 is a schematic view showing each part constituting an example of the embodiment of a composite fluid device according to the present invention and flow paths connecting the parts.
FIG. 14 is a schematic view showing each part constituting an example of the embodiment of the composite fluid device according to the present invention and flow paths connecting the parts.
FIG. 15 is a schematic view showing the details of each part constituting an example of the embodiment of the composite fluid device according to the present invention, flow paths connecting the parts, and valves.
FIG. 16 is a perspective view of the upper plate of the fluid device used in Example.
FIG. 17 is a perspective view of the upper plate of the fluid device used in Example.
FIG. 18 is a graph showing the relationship between the descending speed of the structural material and the amount of plasma acquisition.

### BEST MODE FOR CARRYING OUT THE INVENTION

As a result of conducting extensive studies to solve the aforementioned problems, the inventors of the present invention found that it is possible to reduce the resistance to outflow of the liquid component to the outside of the filter caused by the surface tension of the liquid component (analyte) reached the lower surface of the filter, by contacting the structural material to the lower surface of the filter (the surface of the secondary side of the filter), and it is possible to continue gentle filtration without applying pressure to the filter from the outside, by allowing continued reduction of the resistance to the outflow, and the present invention has been completed. Hereinafter, an example of an embodiment of the present invention is described.

### «Fluid device»

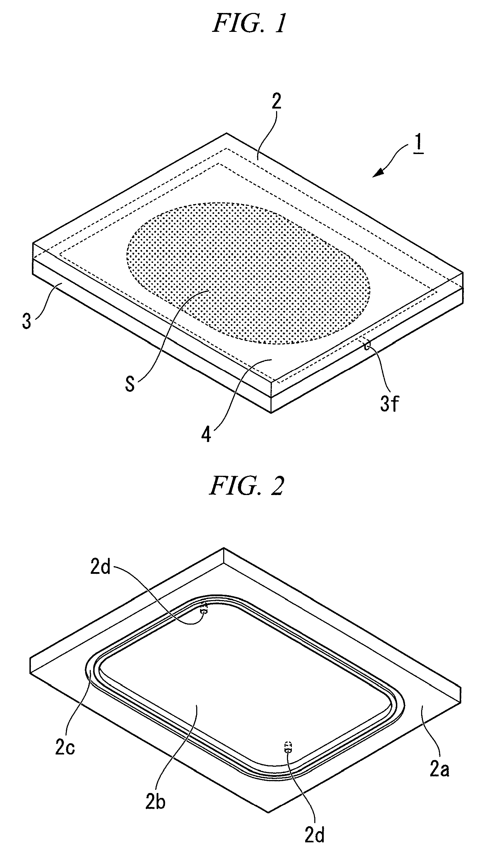

FIG. 1 is an example of the embodiment of the fluid device according to the present invention. In the fluid device 1 of this embodiment, as an example, the upper plate 2 made of transparent resin that constitutes the lid of 10 × 8 × 0.5 cm in size, the lower plate 3 made of transparent resin constituting the bottom of the same size, the separation unit 4 having a structural material that covers a membrane filter and the lower surface thereof, are provided. For example, the main body of the fluid device 1 in the present embodiment is composed of the upper plate 2 and the lower plate 3. The sample S containing the solid component and the liquid component is injected to the upper surface of the membrane filter that constitutes the separation unit 4. Furthermore, the sample S is not an essential component of the fluid device in the present embodiment.

As shown in FIG. 2, as an example, a rectangular recess 2b having the depth of 0.8 mm is formed on the lower surface 2a of the upper plate, and four corners are rounded. A groove 2c having the depth of 1.3 mm is provided around the outside of the recess 2b into which a rubber O-ring can be fitted. Flow through holes 2d are opened one by one near the opposing two corners in the recess 2b, respectively, through which air can pass.

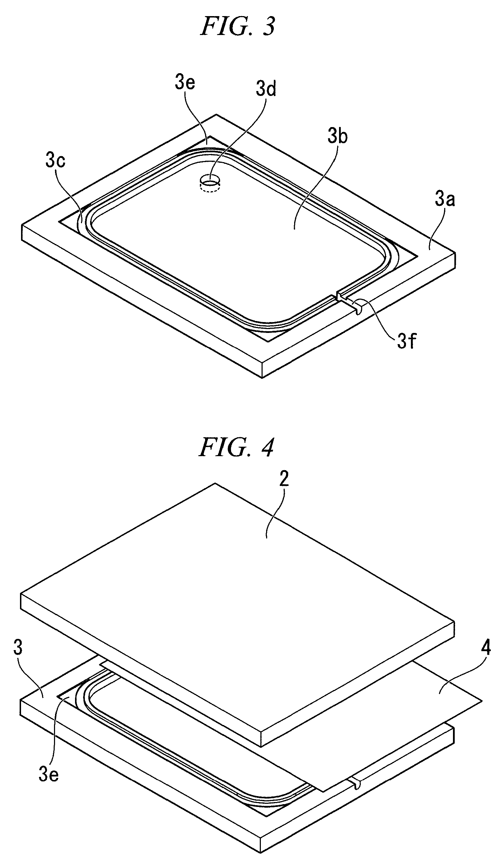

As shown in FIG. 3, as an example, a rectangular recess 3b having the depth of 3.0 mm and having the same shape of the recess 2b provided on the upper plate is formed on the upper surface 3 a of the lower plate, and four corners are rounded.

A groove 3c is provided around the outside of the recess 3b into which a rubber O-ring can be fitted. At the one corner of the recess 3b, a through hole 3d is opened through which air can pass. In addition, at the outside of the groove 3c, a rectangular step portion 3e having the depth of 0.3 mm and surrounding the groove 3c is formed. It is possible to fit the periphery of the membrane filter and structural material constituting the separation unit 4 to the step portion 3e. Furthermore, a groove 3f which is cut so as to pass from one side of the recess 3b to the side of lower plate is formed. The groove 3f can be connected to a tube (not shown) which can serve as an outlet for the filtrate outflow of the filtrate (the filtered liquid component) to the outside of the fluid device.

As shown in FIG. 4, it is possible to assemble the fluid device 1 by aligning the orientation of the recess 2b of the upper plate and the recess 3b of the lower plate so that each of the recess faces each other, putting separation unit 4 comprising the membrane filter and the structural material between the both plates, and fixing with clips and the like in a state in which both of the plates are pressed against each other. Periphery portions of the membrane filter and the structural material (not shown) covering the lower surface constituting the separation unit 4 is fixed between the upper plate 2 and the lower plate 3 by being fitted to the step portion 3e of the lower plate 3, and by being further sandwiched by the upper plate 2.

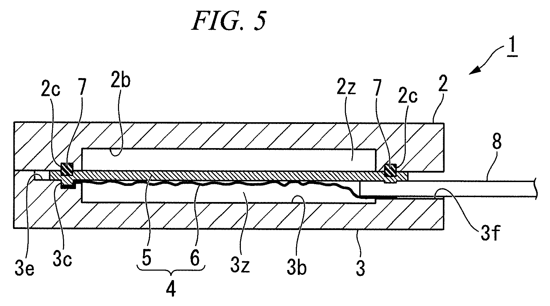

A schematic sectional view of the fluid device 1 is shown in FIG. 5. The space formed by opposing the recess 2b of the upper plate 2 and recess 3b of the lower plate 3 is partitioned into the first space part 2z of the upper plate 2 side and the second space part 3z of the lower plate 3 side between the both plates by the membrane filter 5 and the structural material 6. In addition, the space formed by facing the recess 2b and the recess 3b has a liquid-tight structure (airtight structure) that does not leak liquid, except the through-holes 2d, 3d and the groove 3f, because, for example, the O-ring 7 having a diameter of about 2 mm is fitted in the groove 2c provided along the recesses 2b, and 3b of the upper plate and the lower plate.

A tube 8 constituting an outlet is inserted into the groove 3f provided at the side of the lower plate 3.

The first end of the tube 8 is inserted into the gap of the membrane filter 5 and the structural material 6 constituting the separation unit 4. The second end of the tube 8 exists outside of the fluid device 1.

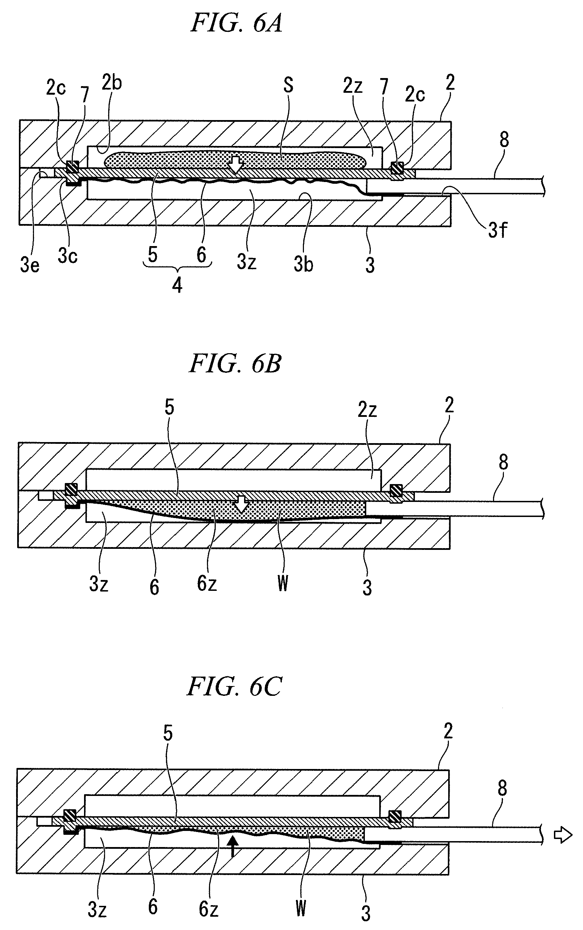

The working mechanism of the fluid device 1 is briefly shown in FIG. 6. First, the sample S is injected by using a syringe from the through hole 2d of the upper plate 2 to the first space part 2z. Injected sample S is spread on the upper surface of the membrane filter 5 (FIG. 6 A). The sample S penetrates into the inside of the membrane filter 5, and the liquid component reaches the lower surface of the membrane filter 5. On the lower surface of the membrane filter 5, a thin resin film as the structural material 6 is disposed in advance so that the film locates in contact or close proximity. Therefore, the liquid component contacts the structural material 6 at the lower surface of the membrane filter 5. By this contact, the liquid component is drawn to the surface of the structural material 6, and the liquid component fills the gap between the structural material 6 and the lower surface of the membrane filter 5.

If, when the structural material 6 is not arranged, the liquid component reached the lower surface of the membrane filter 5 does not drip from the holes opened on the lower surface, or the dripping is slow, because the surface tension of the liquid component at the lower surface of the membrane filter 5 is stronger than the gravitational force exerted on the liquid component. On the other hand, in the present embodiment, the thin resin film as the structural material 6 is arranged so as to cover the lower surface of the membrane filter 5, since the liquid component is in contact with the structural material 6 as soon as it reaches the lower surface, the surface tension of the liquid component at the lower surface is easily solved. That is to say, the liquid component which has reached the lower surface behaves in accordance with the gravity without being obstructed by the surface tension of itself, as long as it is in contact with the structural material 6. In addition, when the liquid accumulated in the gap of the structural material is lowered together with the deformation of the structural material by the action of its own weight, a negative pressure is generated at the lower surface of the membrane filter, and further filtration is promoted by generating the effect of aspirating the liquid component in the pores of the membrane filter.

As a result, the sample S is naturally filtered by capillary action and gravity of the membrane filter 5, and the liquid component depresses the structural material 6 in accordance with the filtration rate. Filtration is naturally continued, the volume of a filtrate housing portion 6z constituted by the gap between the lower surface of the membrane filter 5 and the structural material 6 and by the filtered liquid component is expanded, and a liquid pool W is formed (FIG. 6 B). The volume of the filtrate housing portion 6z and the volume of the liquid pool W are almost the same, and a room in the filtrate housing portion 6z into which air enters is almost none.

Until the sample S of the upper surface of the membrane filter 5 is eliminated, filtration can naturally continue. Therefore, the first space part 2z is not necessary to be positive pressure by applying pressure from the outside of the first space part 2z. As a result, it is possible to selectively obtain the liquid component by filtering without damaging or collapsing the solid components contained in the sample S.

At the same level (height) as the lower surface of the membrane filter 5, the first end of the tube 8 which is inserted into the filtrate housing portion 6z exists in the liquid pool W. By lightly aspirating the tube 8 from the second end, applying negative pressure to the inside of the tube, and placing the second end in a position lower than the first end, the principle of the siphon is activated, and the liquid pool W comprising the liquid component filtered into the liquid housing portion 6z is discharged to the outside of the fluid device 1 through the tube 8 (Fig. 6 C).

As the volume of the filtrate housing portion 6z is reduced as the liquid component is discharged, the structural material 6 naturally rises. Until almost all of the liquid pool W in the filtrate housing portion 6 is eliminated, the discharging of the liquid component in accordance with the principle of the siphon naturally continues. Since the structural material 6 is in contact again to the lower surface of the membrane filter 5 by taking out the liquid component, the space below the membrane filter 5 can be brought close to zero without limit. Therefore, it is possible to take out the liquid component even in small quantities.

According to the above operating mechanism, it is possible to obtain the liquid component of interest from the second end of the tube 8 at a high recovery rate.

### <Study on the behavior of the liquid component at the filter lower surface>

It is considered that the liquid component penetrates through the filter by utilizing the capillary action. The behavior of the liquid component at the lower surface of the filter is considered by modeling the capillaries of the filter with a hydrophilic capillary (narrow tube).

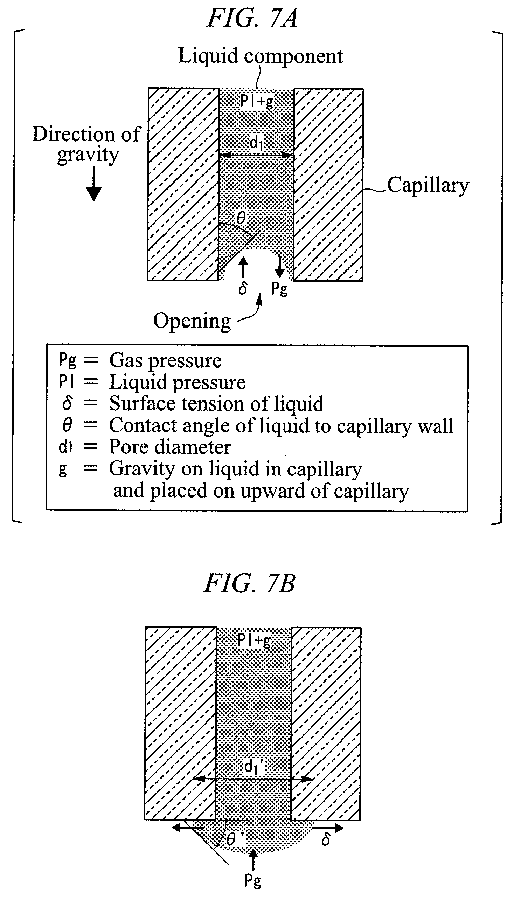

FIG. 7A shows a state in which the liquid component comes down in accordance with gravity from the upper side of the capillary towards opening. In this state, the affinity to the hydrophilic capillary wall, surface tension δ, pressure PI of the liquid component, gas pressure Pg of the outside of the capillary, and gravity g are applied to the liquid component in the capillary, This gravity is the sum of the gravity on the liquid component itself in the capillary and the gravity on the liquid component of the upper part of the capillary (corresponding to the sample S of the upper surface of the membrane filter), that is to say, self-weight (weight) of the liquid component which exists above the capillary tip. If the capillary is hydrophilic, the liquid component flows towards the opening at the tip of the capillary (corresponding to the opening portion of the lower surface of the membrane filter) by the gravity of the liquid component and the affinity for the capillary wall without applying pressure from the outside.

The liquid component that has reached the opening of the capillary is further pulled to the tip of the opening. At the tip of the opening, since the affinity of the capillary to the liquid goes towards the horizontal direction (left-right direction in FIG. 7 B), its surface tension is not broken only by the gravity of the liquid component. As a result, it ceases in a state in which the liquid component is hanging from the tip of the capillary, as shown in the figure.

In this ceased state, if large pressure is applied from the upper part of the capillary, it is considered to be possible to cause to flow out the liquid, thereby breaking the surface tension. However, when considering the behavior at the lower surface of the membrane filter, it is considered that it is virtually impossible to flow out at the same time from all of the tips of the capillaries present in the whole of the lower surface of the membrane filter. Thus, it is considered that the problems occur in which it is impossible to effectively use the filtration area of the filter because the flow in the membrane filter becomes uneven, and damage or disruption of the solid component easily occurs by partially increasing the flow speed.

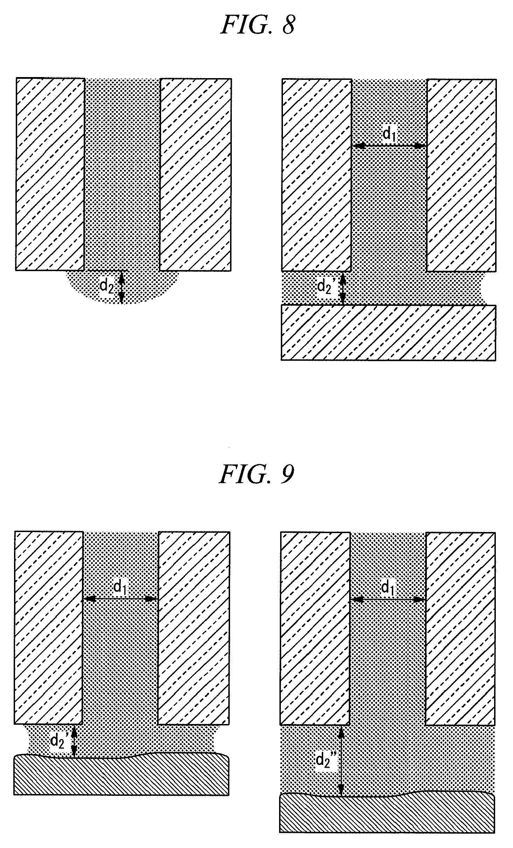

Then, instead of the case in which the pressure is applied in a state in which the liquid component is hanging from the tip of the capillary (the ceased state), the case in which the plate is arranged at the capillary opening (corresponding to the case of arranging the plate on the lower surface of the membrane filter) is considered. As shown in FIG. 8, the thickness of the downward drop is set to d₂, when a smooth plate is closed to the lower part of the capillary opening at a distance of d₂', wetting proceeds between the smooth plate member and the opening, the liquid is drawn from the opening, and the gap d₂' is filled with the liquid component, if d₂ ≥ d₂'.

It is not necessary that the liquid component that has reached the opening breaks the surface tension of itself when the opening of the capillaries present in the whole of the lower surface of the membrane filter and the gap of distance d₂ are filled with the liquid component. Therefore, in the whole capillary constituting the membrane filter, the resistance to outflow of the liquid component is only flow path resistance.

However, it is not easy to take out the liquid component filled in the gap since the distance d₂' of the gap between the capillary opening (the lower surface of the membrane filter) and the plate member is shorter than the distance d₂. This is because it is necessary to break the flow path resistance of the flow between the flat plates in order that the liquid component flows through the gap between of the upper surface of the plate member and the capillary opening (the lower surface of the membrane filter). It is difficult to break the flow path resistance even if the positive pressure is applied to the upper part of the capillary (the upper surface of the membrane filter) in order to break this flow path resistance, because the pore diameter d₁ of the capillary (the capillary of the membrane filter) is actually and extremely thin, and the pressure enough to push out the liquid component in the gap between the capillary opening (the lower surface of the membrane filter) and the plate member in the horizontal direction is not transmitted. In addition, if the negative pressure is applied to the gap by aspirating the liquid component in the gap between the capillary opening and the plate member, the plate member is attached to the capillary opening (the lower surface of the membrane filter), and the flow path between the flat plates (the gap) is crushed. Thus, it is difficult to take out the liquid filled in the gap between the lower surface of the membrane filter and the plate member. The reason that it is difficult as just described is in that the material constituting the plate member is rigid enough for being not easily deformed by the weight of the small amount of the liquid component that reached the membrane filter lower surface.

Then, instead of the case in which the plate member is arranged at the capillary opening in a state in which the liquid component is hanging from the tip of the capillary (the stop state), the case in which a flexible film material is arranged at the capillary opening (corresponding to the case of arranging the flexible film material on the lower surface of the membrane filter) is considered. As shown in FIG. 9, in the same manner as the case in which the plate member is arranged, wetting proceeds between the capillary opening and the flexible film material, the liquid is drawn from the opening, and the gap of distance d₂' is filled with the liquid component.

It is not necessary that the liquid component that has reached the opening breaks the surface tension of itself when the opening of the capillaries present in the whole of the lower surface of the membrane filter and the gap of distance d₂ are filled with the liquid component. Therefore, in the whole capillary constituting the membrane filter, the resistance to outflow of the liquid component is only flow path resistance.

As the gap is filled with the liquid component, the flexible thin film material is deformed and drops by the self-weight of the liquid component. Here, the reaction force of the flexible thin film material for the weight of the accumulated liquid component is substantially zero, and the gravity of the accumulated liquid component contributes to the force to draw the liquid component in the capillary. As a result, as the liquid component in the capillary is continuously withdrawn, the flexible thin material continues to drop in accordance with the increase of the self-weight of the accumulated drawn liquid component, and the distance d₂" of the gap spreads in permitted extent. In this case, the contact of the liquid component which is filtered to the lower surface of the membrane filter and the thin film material which is pressed down is maintained.

The liquid components filled in the gap of distance d₂" can be taken out easily because the flow path resistance is small. When the negative pressure is applied to the gap by aspirating the gap between the lower surface of the membrane filter and the thin film material, as the liquid component is removed, the thin film material rises while the thin film material is deformed and ultimately returns to the original position, that is to say, the position where it is in contact with the lower surface of the membrane filter. Thus, even if the negative pressure is applied to the gap, since the flow path is enlarged by descending of the thin film material, flow path for aspirating the liquid component is not immediately crushed, and the liquid component can be efficiently recovered without leaving the liquid component in the gap.

In the fluid device 1 of the present embodiment, as described above, the flexible thin film material as the structural material 6, is arranged so as to cover the lower surface of the membrane filter 5.

### <Flexible thin film material>

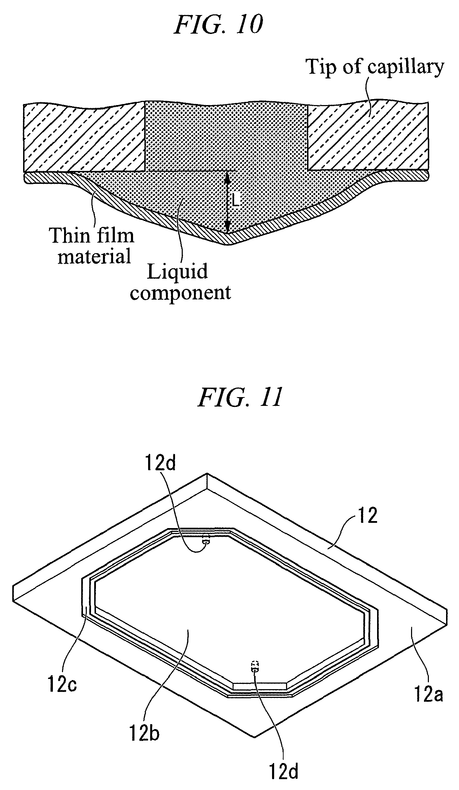

The thin film material having flexible and plastic or elastic properties suitable for the structural material 6 of the fluid device 1 will be described below with reference to FIG. 10.

The displacement amount (L) of the flexible thin film material having a thickness (H) can be expressed as (L) ∝ bending moment (M) / {elastic modulus (E) x moment of inertia of cross section (I)}. The force (P) required for the displacement is (P) ∝ (E) × (I), and results in (P) ∝ (E) × (H)³ since (I) ∝ (H)³.

Thus, since the force P required for deforming the thin film material is the product of the elastic modulus (E) and the cube of the thickness (H), the thickness (H) is particularly important. In other words, it is preferable that the thickness (H) is small. In addition, it is preferable that the elastic modulus (E) is small.

For example, since kitchen wrap made of the resin thin film material commercially available in the food sector has water resistance and water impermeability, a low elastic modulus, and an extremely small thickness, the force necessary for the deformation (P) is substantially zero. Thus, as the structural material 6 in the present embodiment, the resin thin film material such as kitchen wrap and film are suitable.

Examples of such resin thin film material having water resistance and water impermeability include, for example, the thin film material which is made from one or more of the synthetic resin raw materials selected from the group consisting of a plurality of synthetic resin exemplified below.
- Low-density polyethylene (popular name: LDPE, tensile elastic modulus: 100 to 240 MPa, elongation: 90 to 800 %)
- High-density polyethylene (popular name: HDPE, tensile elastic modulus: 400 to 1000 MPa, elongation: 15 to 100 %)
- Polypropylene (tensile elastic modulus: 1000 to 1400 MPa, elongation: 200 to 700 %)
- Polyvinylidene chloride (tensile elastic modulus: 340 to 550 MPa, elongation: 250 %)
- Polyvinyl chloride (tensile elastic modulus: 150 to 300 MPa, elongation: 200 to 450 %)
- Polymethylpentene (tensile elastic modulus: 800 to 2000 MPa, elongation: 50 to 100 %)
- Ethylene-vinyl acetate copolymer (tensile elastic modulus: 10 to 50 MPa, elongation: 650 to 900 %)
- Polyethylene terephthalate (tensile elastic modulus: 3000 to 4000 MPa, elongation: 70 to 130 %)
- Polyamide (tensile elastic modulus: 600 to 2800 MPa, elongation: 25 to 320 %)
- Polycarbonate (tensile elastic modulus: 1100 to 2500 MPa, elongation: 60 to 100 %)

### <Overview of the structural material 6>

The separation unit 4 provided in the fluid device 1 of the present embodiment comprises at least the filter 5 and the structural material 6.

The structural material 6 applicable to the separation unit 4 is not limited to the above thin film materials, and can be applied without restriction as long as it is a structural material which can be arranged so that it covers the lower surface of the filter 5; and movably arranged at the lower surface side of the filter 5so that it is capable of being lowered or raised in a state of maintaining contact with the liquid component to be filtered from the filter 5.

Here, the term "movably" means both of the cases of passively movable and actively movable. As the case of actively movable, for example, the case in which the raising and lowering of the structural material 6 is controlled by attaching another member for controlling the structural material 6, thereby pushing down or pushing up the member, can be exemplified. In this case, it is not required that the structural material 6 is flexible. In addition, as the case of passively movable, as described above, the case of being naturally deformed and lowered by the load of the filtered liquid component, and being automatically deformed and raised by aspirating the filtered liquid component (liquid pool) can be exemplified.

Furthermore, the term "movably" can be replaced by the term "movable" or "freely movable", based on the meanings given above,.

The structural material 6 in the separation unit 4 of the present embodiment, as an example, is arranged so as to be lowered by the load of the filtered liquid component. In addition, the structural material 6 in the present embodiment is arranged to move (e.g. drop) to the predetermined direction (e.g. cross or perpendicular direction of the surface of the filter 5 (e.g. the lower surface), downward direction, the direction of gravity, and the like) by the load of the analyte filtered from the membrane filter 5.

In the separation unit 4 of the present embodiment, the structural material 6 has the flexibility or deflectibility so as to cover the lower surface of the filter 5, and be able to deform to move away from the lower surface as the liquid component flows out from the lower surface. In addition, with regard to the structural material 6 in the separation unit 4 of the present embodiment, for example, it is preferred to have a water-impermeability. As well, the structural material 6 in this embodiment has a water impermeability which does not transmit the liquid component filtered by the membrane filter 5 (e.g. analyte).

Here, "the flexibility or deflectibility" includes a degree of flexible property which does not prevent the liquid component to flow out from said lower surface, or a property which enables deformation such as deflection. Examples of the deflectable structural material 6 include, for example, a known deflectable film, a deflectable sheet, a deflectable substrate, a thin film material, and the like.

As an example, the thickness of the structural material 6 is preferably 1.0 µm to 200 µm, more preferably 1 µm to 100 µm, and even more preferably 3 µm to 20 µm. For example, if the thickness is 1.0 µm or more, sufficient structural strength and water-impermeability is easily obtained. In addition, for example, if the thickness is 200 µm or less, it is easy to obtain sufficient flexibility, deflectibility and/or elasticity. As well, the thickness is able to be measured by a method conforming to the standard of JIS K7130 A method.

As an example, the tensile elastic modulus of the structural material 6 is preferably 10 MPa to 4000 MPa. For example, if the tensile elastic modulus is 10 MPa or more, sufficient structural strength is easily obtained. In addition, for example, if the tensile elastic modulus is 4000 MPa or less, sufficient flexibility, deflectibility and/or elasticity are easily obtained.

As well, the tensile elastic modulus is able to be determined as an average value of the measurement value in the longitudinal direction and the measurement value in the lateral direction measured at 23 °C by a method conforming to the standard of ASTMD 638:95.

As well, "tensile elastic modulus" in the present specification and claims means an initial tensile elastic modulus.

As an example, the adhesiveness of the structural material 6 is preferably 0.5 mJ to 5.0 mJ, more preferably 0.5 mJ to 3.0 mJ, even more preferably 0.7 mJ to 2.5 mJ. For example, if the adhesiveness is 0.5 mJ or more, sufficient adhesion strength of the thin film material for the lower surface of the membrane filter is able to be easily obtained. In addition, for example, if the adhesiveness is 2.5 mJ or less, the thin film material is separated from the lower surface of the membrane filter according to the weight of the filtered liquid component, and further, the adherence of the thin film material itself is easily released. As well, the adhesiveness is able to be determined as a predetermined amount of work when using a thin film material of 25 cm² at 23 °C by a method conforming to the known Asahi Kasei method.

In addition, if the structural material 6 constituted by a synthetic resin is a thin film material, a sheet or a film, the surface may be roughened. As the roughening process, for example, crease process, embossing and pleating are exemplified as preferred processes.

When these roughened structural materials 6 are used, it becomes easier to be lowered spontaneously by the filtered liquid component. Furthermore, it prevents the formation of deep grooves (biased wrinkles) in the structural material 6, and the liquid component filtered into the deep grooves is prevented to be trapped and irrecoverable when discharging the liquid component while lifting the structural material 6 by aspirating the liquid pool of the filtered liquid component.

### <Overview of the filter 5>

The separation unit 4 provided in the fluid device 1 of the present embodiment comprises at least the filter 5 and the structural material 6.

The filter 5 applicable to the separation unit 4 is not limited to the above membrane filters, and as long as the filters comprising the lower surface capable of arranging the structural material 6 described above, and the upper surface opposing to the lower surface and capable of developing the liquid component of the sample, any filter can be applied without restriction.

The filter 5 has a function that does not transmit the solid component contained in the sample S, and selectively penetrate the liquid component. Therefore, the filter 5 preferably has a smaller pore diameter than the diameter of the solid component. The pore diameter is preferably the length of about 50 to 80 % of the diameter of the solid component.

As an example, when the sample S is a sample containing blood, or blood (whole blood), the solid component is a component containing blood cells, or blood cells, and the liquid component is a component containing plasma, or plasma, pore diameter of the filter 5 is preferably 1 µm to 10 µm, more preferably 2 µm to 7 µm, and even more preferably 3 µm to 5 µm.

Here, blood cell refers to at least one blood cell selected from a group consisting of red blood cell, white blood cell, neutrophil and eosinophil. Depending on the type of the blood cell to be isolated, the pore size of filter 5 may be selected from the above range as appropriate.

The pore size of the filter 5 does not need to be uniform in the thickness direction, and it is sufficient that pores (capillaries) having smaller pore size enough not to pass through the solid component are distributed at least in any position in the thickness direction of the filter 5. For example, opening of the pores may be arranged in the planar direction at the upper surface of the membrane filter 5, opening of the pores may be arranged in the surface direction at the lower surface of the membrane filter, and the pores may be arranged in the planar direction between the upper and lower surfaces of the membrane filter 5.

The pores arranged at the lower surface of the filter 5 have an opening having a predetermined pore size at the lower surface. In order to break the surface tension of the liquid component which reached the opening, as described above, the structural material 6 is arranged in contact with or in proximity to the lower surface of the filter 5.

When the sample S includes blood, as the filter 5, for an example, a membrane filter is used in which the pore size of the pores of the filter is gradually decreased from the upper surface toward the lower surface, that is, pore size is different at upper surface side and lower surface side and asymmetric in design. If the pore size of the pores are arranged so as to be gradually smaller in this manner, it can reduce clogging of the blood cells in the filter top surface, and more blood samples can be filtered. Alternatively, by using a plurality of filters having different pore size of the pores in combination, arranging a filter having larger pore size of the pores at the upper surface side, and arranging a filter having smaller pore size of the pores at the lower surface side, a similar effect can be obtained.

As an example, the thickness of the filter 5 is preferably 100 µm to 1000 µm, more preferably 200 µm to 600 µm, and even more preferably 300 µm to 500 µm. For example, if the thickness is 100 µm or more, it is possible to sufficiently carry out the removal of the solid components. In addition, for example, if the thickness is 1000 µm or less, the flow path resistance in the filter thickness direction becomes not too large, and natural filtration of the liquid component by capillary action and gravity is facilitated. Moreover, since the amount of liquid component remaining inside the filter is reduced, the processing efficiency is improved.

As an example, the filtration rate per unit area of the filter 5 is preferably 1 µL to 100 µL/cm²·minute, more preferably 5 µL ∼ 60µL/cm²·minute, and even more preferably 10 µL to 50 µL/cm²·minute. When a filter having too slow filtration rate is used, the process efficiency is deteriorated. Although it is better to use a filter having fast filtration rate, when a filter having too fast filtration rate is used, there is a risk that blood cells will pass through the filter, in fact.

### <Overview of the separation unit 4>

The separation unit 4 of the present embodiment comprises at least the filter 5 and the structural material 6.

The filter 5 is a filter capable of selectively filtering the liquid component from a sample containing liquid component and solid component, for example, a preferred filter is one having the aforementioned properties.

In the present specification and claims, the expression "selectively filtering the liquid component" means preferentially filtering the liquid component than the solid component, and its priority degree is very high.

It is preferred that the filter for selectively filtering the liquid component from the sample is substantially impermeable to the solid composition.

The filter 5 may be a filter capable of selectively extracting the liquid component from a sample containing liquid component and solid component.

It is preferable that the structural material 6 is movably arranged at the lower surface side of the filter 5 so as to promote the filtration, while maintaining contact with the liquid component filtered from the filter 5. For example, it is possible to facilitate the filtration by using the structural material having the nature described above.

In the present specification and claims, the term "filtration is promoted" also means that the liquid component is continued to be in a state in which the liquid component is naturally filtered according to at least one of gravity and capillary action. In addition, the term also means that the filtration rate improves by this continuation.

According to the separation unit 4, since it is possible to continue the gentle filtration without applying the pressure to the filter 5 from the outside, and smoothly recover the filtered liquid component, the damage or disintegration of the solid component contained in the sample is prevented, and it is possible to prevent that a portion of the liquid component is mixed in the liquid component.

As a result, it is possible to obtain the liquid component in which mixing of undesirable contaminants is reduced.

The liquid component filtered by the separation unit of the present embodiment can be rephrased, more broadly, as the analyte. Therefore, the filter 5 is a filter to selectively filterate the analyte from a sample containing the analyte. This paraphrase can be applied throughout the specification.

The filter 5 which constitutes a separation unit in this embodiment, for convenience, has been described by exemplifying the case of a filter comprising an upper surface and a lower surface facing to the upper surface (pairing with the upper surface).

In this regard, "the upper surface of the filter 5" can be rephrased as the primary side of the filter 5, the surface where the filter 5 contacts with a sample containing the analyte, or the surface to which the analyte penetrates in filter 5. In addition, "the lower surface of the filter 5" can be rephrased as the surface of the secondary side of the filter 5, the surface facing to the surface of the primary side of the filter 5, or the surface from which the analyte appears (immerses out) in the filter 5. Here, the surface of the primary side and the surface of the secondary side may be substantially parallel each other, and may not be parallel. These paraphrases can be applied throughout the specification.

In the present specification and claims, although the term "the primary side of the filter 5" basically means the surface of the primary side of the filter 5 (front surface (surface)), it may include the space in the vicinity of the surface. Similarly, "secondary side of the filter 5" basically means the surface of the secondary side of the filter 5 (front surface (surface)), it may include the space in the vicinity of the surface. Especially, when the surface of the filter 5 is referred to, it is specified such as the surface of the primary side of the filter 5 (the upper surface of the filter 5) or the surface of the secondary side of the filter 5 (the lower surface of the filter 5).

In addition, the primary side, the secondary side of the filter 5, may be paraphrased by one side, and another side of the filter 5, respectively.

### <Overview of fluidic device 1>

The fluid device 1 of the present embodiment comprises at least the separation unit 4 having the filter 5 and the structural material 6.

The fluid device 1 further comprises a housing which forms the first space part 2z into which the sample S can be injected at the upper side of the filter 5, and forms the second space part 3z independently from the first space part 2z, which accommodates the structural material 6 at the lower side of the filter 5 (e.g. the upper plate 2 and the lower plate 3), a sample introduction inlet which communicates with the first space part 2z and provided in the housing (e.g. the through hole 2d of the upper plate 2), an outlet for the sample discharging, which communicates with the gap between the filter 5 and the structural material 6 in the second space part 3z (e.g. the tube 8 inserted into the groove 3f).

In the fluid device 1, the structural material 6 covers the lower surface of the filter 5, the peripheral portion of the structural material 6 is fixed to the peripheral portion of the lower surface of the filter 5, and the central portion of the structural material 6 is movably arranged from the lower surface of the filter 5 to the housing (e.g. the lower plate 3) constituting the second space part 3z. According to the above, the filtrate housing portion 6z which is variable in volume is formed between the structural material 6 and the lower surface of the filter 5. Moreover, the tube 8 constituting the outlet is in communication with the filtrate housing portion 6z and the outside of the fluid device 1.

In the fluid device 1, the groove 3f and the tube 8 constituting the outlet for discharging the filtered liquid component out of the fluid device 1 is provided on the same level (height) as the lower surface of the filter 5. The position for providing the outlet is not limited to this position, for example, the through hole 3d for air vent provided at a corner of the recess 3b of the lower plate 3 may be used as the outlet. In this case, it is sufficient to insert the tube 8 into the second space part 3z from the through hole 3d, and further insert the first end of the tube 8 into the filtrate housing portion 6z.

When recovering the liquid component from the filtrate housing portion 6z by utilizing the principle of siphon, depending on the viscosity of the liquid component, it is preferable that the inner diameter of the tube 8 is about 0.2 to 2 mm. When the inner diameter is too small, the flow path resistance is increased, when the inner diameter is too large, the filtrate is leaked without aspirating the tube, and it may become impossible to use the principle of siphon.

The housing constituting the fluid device 1 is constituted by the lid (e.g. the upper plate 2) forming the first space part 2z and provided with the concave portion 2b (recess) that covers the upper surface of the filter 5, and the bottom forming the second space part 3z and provided with the concave portion 3b (recess) that covers the lower surface of the filter 5 and the structural material 8. The shape of the lid and the bottom is not necessarily plate-shaped.

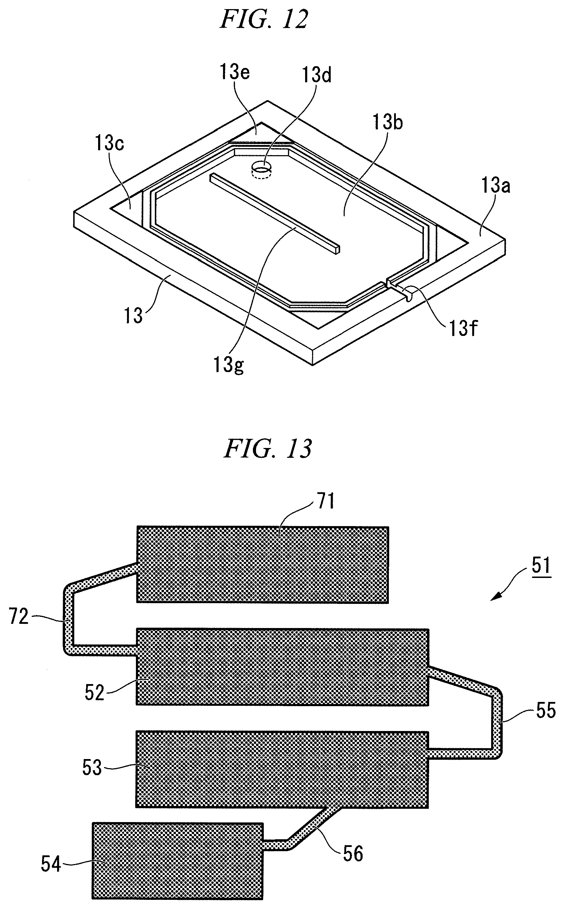

Examples of the modification of the upper plate 2 and the lower plate 3 constituting the fluid device 1 include the upper plate 12 and the lower plate 13 as shown in FIGS. 11 and 12. The recess 12b formed on the lower surface 12a of the upper plate 12 is octagonal, and two through holes 12d are formed at the bottom surface. In addition, the groove 12c capable of fitting the O-ring is formed along the outer periphery of the recess 12b. The recess 13b formed on the upper surface 13a of the lower plate 13 is also octagonal as in the recess 12b of the upper plate 12, and one through hole 13d is provided at the bottom surface.

In addition, a rectangular parallelepiped-shaped support pillar 13g is provided at the central portion of the recess 13b of the lower plate 13, along the longitudinal direction. The height of the support pillar 13g is the same as or slightly lower than the recess 13b. The support pillar 13g is arranged to support the separation unit 4 comprising the membrane filter 5 and the structural material 6 from below. Since the support pillar 13g is slender; when the structural material 6 is lowered by the liquid component, not all of the structural material 6 is lowered, that is, only a part of the structural material 6 can be lowered. By providing the support pillar 13g, it is possible to prevent unwanted lowering of the structural material 6 when not in use such as during transportation of the fluid device 1.

The groove 13c capable of fitting the O-ring is formed along the outer periphery of the recess 13b of the lower plate 13, and the groove 13 and step portion 13e which is shallower than the recess 13b are further provided so as to surround the groove 13. The peripheral portions of the membrane filter and structural material constituting the separation unit 4 are capable to be fitted to the step portion 13e. Furthermore, the groove 13f which is a cut leading to the side of the lower plate from one side of the recess 13b is formed. The groove 13f is able to connect a tube (not shown) which can function as an outlet for the filtrate to flow out from the fluid device.

The upper plate 2 and the lower plate 3 and the upper plate 12 and lower plate 13 of the modifications constituting the fluid device 1 are constituted by the transparent resin material comprising methacrylic styrene, respectively. The constitutional material of the upper plate 2 and the lower plate 3 is preferably a transparent resin since it is easy to observe and operate, and easy to process. However, it is also possible to use materials other than the transparent resin, for example, such as an opaque resin, a metal, and a ceramic. Type of the synthetic resin constituting the transparent resin and the opaque resin is not particularly limited, and the known synthetic resin is able to be applied.

According to the fluid device 1, since it is possible to continue the gentle filtration without applying the pressure to the filter 5 from the outside, and smoothly recover the filtered liquid component, the damage or disintegration of the solid component contained in the sample is prevented, and it is possible to prevent mixing of a portion of the liquid component in the liquid component.

As a result, it is possible to obtain the liquid component in which mixed undesirable contaminants is reduced.

### «Separation method»

One embodiment of the separation method according to the present invention is a method comprising using the above described separation unit 4 or the a fluid device 1, and obtaining the liquid component by separating the solid component from the sample containing the liquid component and the solid component. Hereinafter, an example of the separation method using the fluid device 1 provided with the separation unit 4 will be described with reference to FIG. 6.

The sample containing the liquid component and the solid component is supplied to the upper side of the filter 5, at least the liquid component of the sample is penetrated inside of the filter 5 by capillary action, and continuing the capillary action by contacting the liquid component reached the lower surface of the filter 5 with the structural material which is in contact with or close to the lower surface of the filter 5 (FIG. 6 A).

As a result, the volume of the gap between the filter 5 and the structural material 6 (filtrate housing portion 6z) is expanded by pressing down the structural material 6 by the liquid component (filtered component) flowed out from the lower surface of the filter 5 during gradually filtering the sample S supplied from the upper surface of the filter 5 by the filter 5, and the capillary action is continued via the filtered liquid component by the structural material 6 which has been pressed down (FIG. 6 B).

In order to proceed the filtration as described above, it is important that the protruding portion due to the surface tension of the filtered liquid component is in contact with the structural material 6 in the immediate vicinity (surface) of the lower surface of the filter 5. Therefore, it is preferable that the filtrate housing portion 6z between the filter 5 and the structural material 6 is deflated in advance, and the structural material 6 is allowed to close contact with or close proximity to the lower surface of the filter 5 before supplying the sample S.

When the filtration progresses, the liquid pool W is formed in the filtrate housing portion 6z under the filter 5. When the bubble enters the lower surface of the filter 5, there is a concern that the flow of filtration might be halted by being unable to tear the surface tension by the liquid component which has reached the lower surface from the upper surface of the filter 5. Therefore, in order to continuously proceed withthe filtration, it is important that the liquid pool W is always in contact with the lower surface of the filter 5 and the structural material 6. Ordinarily, the air hardly enters during the filtration process if the filtrate housing portion 6z is deflated, and the structural material 6 is allowed to close contact with the lower surface of the filter 5 before the filtration.

In order to remove the air contained in the interior of the filter 5 prior to the filtration, for example, the filter 5 is impregnated with liquid, and the filter 5 is allowed to be in a wet state with the liquid in advance. Furthermore, as an example, it is also possible to immerse the filter 5 in liquid, and the interior of the filter 5 is filled with the liquid. Liquid to be impregnated in the filter 5 is not particularly limited unless the liquid have properties that adversely affect the liquid component to be filtered. For example, if the sample S includes blood, the use of physiological salts solution is exemplified by considering that the solution does not lyse blood cells which are the solid component.

The liquid pool W accumulated in the filtrate housing portion 6z can be recovered from the tube 8 to the outside of the fluid device 1 at an appropriate timing. It is possible to discharge the liquid component easily filtered by the principle of siphon to the outside by aspirating the tube 8 from the outside, and thereby reducing the pressure of the filtrate housing portion 6z. Furthermore, as the volume of the liquid reservoir W is reduced, the structural material 6 is gradually raised and eventually returns to the original position, and the structural material 6 becomes contact with the lower surface of the filter 5. In this case, if the first end of the tube 8 is arranged at the same level (height) as the lower surface of the filter 5, it is possible to completely discharge the filtered liquid component to the outside via the tube 8 from the filtrate housing section 6z until the structural material 6 backs to the lower surface of the filter 5 and becomes in contact therewith.

In the above filtration, there is generally a positive correlation between the speed at which the distance between the lower surface of the filter 5 and the structural material 6 is expanded, and the filtration speed per unit area of the filter 5. In addition, as an example, it is preferable to adjust the speed at which the central portion of the structural material 6 separates from the lower surface of the filter 5 so as to be 10 µm/min to 1000 µm/min, 50 µm/min to 500 µm/min is more preferable, 100 µm/min to 300 µm/min is even more preferable. When the speed is too slow, the efficiency of the filtration process becomes bad. When the speed is too fast, there is a risk of drawing air into the filtrate housing portion 6z from the outside.

In addition, the speed at which the distance between the lower surface of the filter 5 and the structural material 6 is expanded is preferably the filtration speed per unit area of the filter 5 or less.

For example, if the speed at which the distance is expanded is 100 µm/min to 300 µm/min, the filtration rate is preferably 100 µL/(mm²·min) to 300 µL/(mm²·min).

The method for adjusting the speed is not particularly limited, for example, it is possible to accelerate the speed by increasing the amount of the sample S injected to the upper surface of the filter 5, and vice versa. Moreover, it is also possible to accelerate the above speed by attaching the tab to the central portion of the structural material 6, and mechanically pulling the tab downward.

It is possible to obtain the blood plasma which is the liquid component by applying the separation method described above to the fluid device 1 provided with the separation unit 4, and separating blood cells which are the solid component from the sample S including blood. According to this separation method, it is possible to obtain plasma without causing hemolysis since it is not necessary to apply a strong pressure from the outside to the upper and/or lower surface of the filter 5 for filtering, and the method naturally filtrates by utilizing the capillary phenomenon of the filter 5 and the gravity of the liquid component.

According to the separation unit 4 of the present embodiment, as an example, it is possible to obtain plasma containing the polyclonal antibodies from blood collected from the immunized rabbit or sheep.

### <<Kit>>

As described above, for example, the filter 5 which constitutes the separation unit 4 is made to contain liquid in advance. Accordingly, it is possible to prepare the kit containing the separation unit 4, the liquid contained in the filter 5 provided to the separation unit 4.

### «Composite fluid device»

FIG. 13 is a schematic diagram showing an example of the embodiment of the composite fluid device 51 according to the present invention. The composite fluid device 51 is a composite fluid device which detects the biomolecules contained in exosomes in plasma obtained from the sample containing blood by separating blood cells using the separation unit 4 or the fluid device 1 with a separation unit 4, and provided with a preprocessing portion 71 which contains the separation unit 4 or the fluid device 1, an exosome purification portion 52 having a layer modified with compounds having a hydrophobic chain and a hydrophilic chain, a biomolecule purification portion 53, a biomolecule detection portion 54, a first flow path 72 connecting the preprocessing portion 71 and the exosome purification portion 52, a second flow path 55 connecting the exosome purification portion 52 and the biomolecule purification portion 53, and a third flow path 56 connecting the biomolecule purification unit 53 and the biomolecule detection portion 54.

The composite fluid device 51 of the present embodiment is a device which obtains the sample containing blood plasma obtained by removing blood cells from the sample containing the blood at the preprocessing portion 71, and detects the biomolecules contained in exosomes in the sample supplied through the first flow path 72 to the exosome purification portion 52.

In the present embodiment, the second flow path 55 is a flow path for feeding a lysate of exosomes from the exosome purification portion 52 to the biomolecule purification portion 53, and the third flow path 56 is a flow path for feeding the solution containing the purified biomolecules to the biomolecule detection portion 54.

Exosomes are the secretions of the cells, and encapsulate biomolecules derived from the cells of secretory source, such as proteins, nucleic acids, miRNA, and the like. The abnormal cells such as cancer cells present in the living body express specific proteins, nucleic acids, miRNA, and the like in the inside of the cell membrane.

Therefore, it is possible to detect the abnormality of the cells of secretory source by analyzing the biomolecules encapsulated in exosomes. As means for isolating (extracting) the biomolecules encapsulated in exosomes, for example, crushing of the lipid bilayer membranes of exosomes, and the like, are exemplified.

Furthermore, it is possible to detect the abnormality in the living body by analyzing exosomes without the biopsy examination since exosomes are detected in body fluids such as blood circulating in the living body, urine, saliva, and the like.

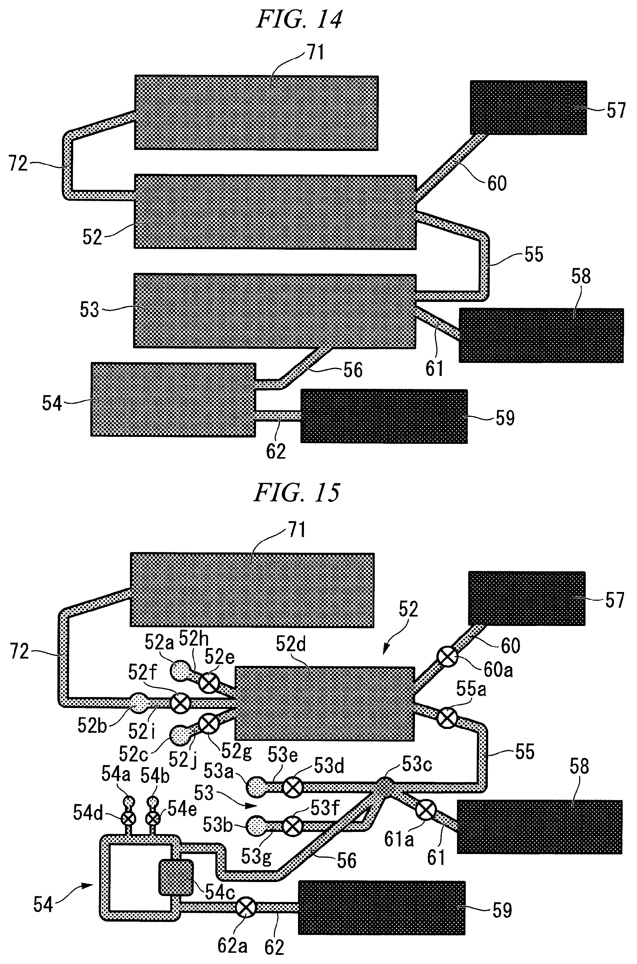

From the viewpoint of preventing a secondary infection by the sample used for the analysis, the composite fluid device 51 of this embodiment further contains, as an example, waste liquid tanks 57, 58, 59 as shown in FIG. 14. Although FIG. 14 shows three waste liquid tanks, it is also possible to be integrated into one or two of the waste liquid tanks.

An example of the constitution of the composite fluid device 51 of the present embodiment will be described with reference to FIG. 15.

The exosome purification portion 52 is provided with the exosome fixing portion 52d which is a portion which fixes exosomes contained in the sample supplied from the preprocessing portion 71 and crushes exosomes, and has the inlet and the layer modified with the compounds having hydrophobic chain and hydrophilic chain. As shown in FIG. 15, the exosome purification portion 52 preferably comprises the inlets for every introducing reagent. That is to say, the exosome purification portion 52 is preferably provided with the sample introducing inlet 52b and the disrupting solution introducing inlet 52c, and more preferably further provided with the cleaning liquid introducing inlet 52a.

The first flow path 72 (outlet) to which the sample containing plasma is discharged from the preprocessing portion 71 is connected to the sample introducing inlet 52b.

In the composite fluid device 51 of the present embodiment, the driving of the liquid of each part other than the pre-processing portion 71 is carried out by the external aspiration pump, the liquid flow is controlled by opening and closing the valve.

As shown in FIG. 15, in the analysis of exosomes, first in the exosome purification portion described above, the sample containing plasma is injected from the preprocessing portion 71 to the sample introducing inlet 52b, the valve 52f of the flow path 52i is opened, and the sample is introduced into the exosome fixing portion 52d by aspiration.

Exosomes in the sample introduced into the exosome fixing portion 52d are captured by the compounds having hydrophobic chain and hydrophilic chain as described above.

The extracellular vesicles such as microvesicles and apoptotic bodies are contained in addition to exosomes in the plasma that constitutes blood, and these extracellular vesicles may be also fixed to the exosome fixing portion 52d. From the viewpoint of the removal of these extracellular vesicles from the exosome fixing portion 52d, it is preferable to wash the exosomes on the exosome fixing portion 52d.

Then, the exosomes fixed to the exosome fixing portion 52d are disrupted. As shown in FIG. 15, the valve 52g on the flow path 52j is opened, the disrupting solution is injected into the disrupting solution introducing inlet 52c, and the disrupting solution is introduced the exosome fixing portion 52d by aspiration. Examples of the disrupting solution include those conventionally known, for example the solution used in cell lysis.

The exosomes captured on the exosome fixing portion 52d are disrupted, and the biomolecules encapsulated in the exosomes are released by passing of the disrupting solution through the exosome fixing portion 52d. The biomolecules released from the exosomes are sent to the biomolecule purification portion 53 through the second flow path 55 via the valve 55a.

As shown in FIG. 15, the biomolecule purification portion 53 is preferably provided with the biomolecule recovery solution introducing inlet 53b and the biomolecule fixing portion 53c, and more preferably further provided with the biomolecule cleaning liquid introducing inlet 53a.

In the present embodiment, it is preferred that the biomolecule fixed by the biomolecule fixing portion 53c is miRNA. The biomolecule is captured on the biomolecule fixing portion 53c by passing of the disrupted exosome solution through the biomolecule fixing portion 53c.

Then, the biomolecule which is fixed to the biomolecule fixing portion 53c is eluted. As shown in FIG. 15, the valve 53f of the flow path 53g is opened, the biomolecule recovery solution is injected to the biomolecule recovery solution introducing inlet 53b, and the biomolecule recovery solution is introduced to the biomolecule fixing portion 53c.

Then, the biomolecule is recovered from the biomolecule fixing portion 53c. The biomolecules are sent to the biomolecule detection portion 54 through the third flow path 56.

The biomolecular detection portion 54 is provided with, as an example, a substrate to which the substances having affinity for the biomolecule are fixed. When the biomolecule is miRNA, it is preferable that the substrate 54c to which the probes complementary to the target miRNA are fixed is provided (refer to FIG. 15.). As the substrate to which the probes complementary to the target miRNA are fixed, for example, conventionally known DNA chips and the like are exemplified.

As shown in FIG. 15, the biomolecule detection portion 54 is preferably further provided with the cleaning liquid introducing inlet 54b.

After the biomolecule has been delivered to the biomolecule detection portion 54, the valve 54d is opened, and the detection probe solution is injected to the detection probe introducing inlet 54a.

Then, the biomolecule and the detection probe solution are circulated in the biomolecule detection portion and mixed.

Next, it is preferable that the substrate (the substrate 54c in FIG. 15) to which the capture probe is fixed is washed to remove the nonspecific adsorption on the substrate.

Then, the intensity of the labeling substance of the complex formed on the substrate 54c is measured. It is possible to quantify the amount of the biomolecules contained in the sample according to the present embodiment since the intensity of the labeling substance reflects the abundance of the biomolecules.

The measurement of the intensity of the labeling substance is carried out by, for example, not shown microscope, light source, and the control unit such as a personal computer.

According to the present embodiment, the analysis of exosomes which conventionally takes one day or more can be performed quickly with only about one hour.

It is possible to detect the biomolecules present on the surface of the exosomes in the exosome purification portion after fixing the exosomes as described above in the exosome purification portion of the device.

The method for detecting the biomolecules present on the surface of the exosomes fixed to the substrate includes forming a complex of the biomolecule on the surface of the exosome and the first molecule that specifically binds to the biomolecule by interaction, and detecting the complex on the substrate (first molecule-exosome complex).

The method for detecting the first molecule-exosome complex is, for example, a step of detecting the fluorescence of the fluorescently labeled first molecule-exosome complex. In addition, it is possible to utilize the detection method according to ELISA.

As an example of the interaction of the first molecule and exosome, for example, the binding reaction such as antigen-antibody reaction is exemplified. As the first molecule, it is not limited to antibody, aptamer is also preferably used. An example of the aptamer, and a nucleic acid aptamer or peptide aptamer is exemplified.

It is possible to analyze the exosomes in two stages by performing the detection of the biomolecule on the surface of the exosome as described above, and the detection of miRNA that is contained in the exosome on this device,.

According to the composite fluid device of the present embodiment, it is possible to detect the abnormality in the living body without the biopsy examination, as an example, by analyzing the exosome in the blood circulating in the living body.

Hereinafter, the present invention will be described by examples, the invention is not limited to the following examples.

### Examples

### <Example 1>

### [Manufacturing of device for separation of plasma]

The upper plate 2 and the lower plate 3 were prepared by cutting two plate members of methacrylic styrene resin of 10 × 8 × 0.5 cm as shown in FIGS. 2 and 3. Specifically, the lower surface 2a of the upper plate is provided with the recess 2b having the depth of 0.8 mm and rounded corners, and forming the groove 2c having the depth of 1.3 mm for fitting an O-ring having the diameter of 2 mm on the periphery of the recess 2b. At the upper surface 3a of the lower plate, the recess 3b having the depth of 3 mm and rounded corners was provided in the same manner as the upper plate 2. The area of the recess 3b became about 40 cm². Furthermore, two holes passing through from the upper surface of the upper plate 2 to the recess 2b are opened at two places as the blood introducing hole and the air vent hole, and the groove 3f leading from one side of the recess 3b to the side of the plate member, the through hole 3d as the air vent, and the squared step portion 3e having the depth of 0.3 mm for accommodating the membrane were formed at the lower plate 3.

As shown in FIG. 4, the low-density polyethylene thin film 6 having the thickness of 10 µm, and the tensile elastic modulus of 220 MPa (which constitutes a part of the illustrated separation unit 4. Hereinafter referred to as the thin film 6.) was placed on the step portion 3e of the lower plate, and the membrane filter 5 (manufactured by Nihon Pall Ltd. "Vivid plasma separation membrane" GR grade) (which constitutes a part of the illustrated separation unit 4. Hereinafter referred to as the membrane 5.) for separating plasma was overlaid on the thin film 6.

As shown in FIG. 5, the tube 8 was fitted into the groove 3f leading from the recess 3b to the side of the lower plate in a state in which about 2 mm of the one end portion (first end portion) of the silicone tube 8 (hereinafter, referred to as the tube 8) having the outer diameter of 2 mm is inserted between the membrane 5 and the thin film 6, with the other end portion (second end portion) extended to the outside of the recess 3b of the lower plate.

The fluid device 1 (plasma separation device) as shown in FIG. 5 was assembled by fitting the silicone O-ring 7 having the diameter of 2 mm into the groove 2c surrounding the outer periphery of the recess 2b of the upper plate, overlaying the separation unit 4 comprising the membrane 6 and the thin film 5 on the lower plate 3 which was set, and integrating the upper plate 2 and the lower plate 3 using the clamping bracket. The membrane 5 and thin film 6 are in a state in which both of them are pressed against the lower plate 3 by the O-ring 7, and the space formed by the first space part 2z of the membrane 5 side and the second space part 3z of the thin film 6 side has the airtight structure (liquid-tight structure) with the exception of the through holes 2d and 3d.

### [Preliminary preparation]

0.7 ml of phosphate-buffered saline (PBS) was introduced into the first space part 2z constituted by the recess 2b in the upper plate 2 of the fluid device 1 and the membrane 5, and PBS was spread over the entire surface of the membrane 5. After the PBS was absorbed into the membrane 5, the air in the inside (the filtrate housing portion 6z) was aspirated from the tube 8 inserted between the membrane 5 and the thin film 6, the thin film 6 was brought into contact with the lower surface of the membrane 5.

### [Plasma separation operation]

3 ml of the human whole blood which had been subjected to the anti-coagulation treatment by the conventional method was introduced to the first space part 2z over the membrane 5. The human whole blood that was used contained 55 % plasma. The first space part 2z became in a state in which it was almost filled with blood (whole blood) except that a small amount of the air remained.

As the blood was absorbed from the upper surface of the membrane 5, yellow water containing the plasma was accumulated in the filtrate housing portion 6z between the lower surface of the membrane 5 and the thin film 6. As a result, the thin film 6 was lowered by its weight, 1.5 mm away from the membrane 5 at the maximum, and became a state of water bag in which plasma was accumulated. In this state, a small amount of blood was still left in the first space part 2z over the membrane 5.

After about 3 minutes from the introduction of blood, the liquid component containing plasma and PBS was pulled out to the outside of the tube 8 by aspirating the silicone tube 8 inserted into the filtrate housing portion 6z of the fluid device 1. As the liquid component flowed out from the filtrate housing portion 6z to the outside in accordance with the principle of the siphon, blood remained on the upper surface of the membrane 5 was gradually absorbed to the membrane 5.

As blood on the membrane 5 was reduced, and the discharging of the liquid component under the membrane 5 advanced; the thin film 6 which had been lowered away from the membrane 5 rose and approached to the membrane 5 according to decreasing of the plasma. As blood on the membrane 5 was further reduced; the membrane 5 was attracted to the upper plate 2 and stuck to the ceiling of the recess 2b. After 10 minutes from the introduction of blood, most of the liquid component was discharged to the outside of the tube 8, and the thin film 6 was again adhered to the entire lower surface of the membrane 5. Almost all of the blood on the membrane 5 was filtrated.

The volume of the liquid component which could be recovered from the second end of the tube 8 was 1.7 ml, and there was no contamination of the blood cells by hemolysis. The total liquid amount of: 0.7 ml of PBS introduced in the preliminary preparation, 1.65 ml of plasma from 3 ml of blood subsequently introduced, was 2.35 ml. Thus, the recovery rate of the liquid component was 72.3%. If all of PBS which penetrated to the membrane 5 in the preliminary preparation was recovered, the volume of plasma obtained by subtracting the PBS component from the liquid component which was recovered from the second end portion of the tube 8 was 1.0 ml, and the recovery rate of plasma was 60.6%. This result is also shown in Table 1.

### <Example 2>

In the manufacturing of the fluid device 1 of Example 1, the film 6 which was subjected to a creasing treatment was used as the thin film 6, and put on the lower plate 3. The fluid device 1 was manufactured in the same manner with regard to the others as in Example 1.

The membrane 5 was moistened by introducing 0.7 ml of PBS, and the air between the membrane 5 and the thin film 6 was aspirated. As a result, the thin film 6 which was subjected to creasing treatment in advance became in contact with the lower surface of the membrane 5, and the fine wrinkles appeared on the surface of the thin film.

3 ml of the whole blood which had been subjected to the anti-coagulation treatment was introduced to the first space part 2z of the fluid device 1, and the same plasma separation procedure was carried out as in Example 1. As a result, it was possible to recover the liquid component containing plasma from silicone tube 8. Hemolysis did not occur, and there was no contamination of the blood cells in the liquid component.

The processing speed was faster than that of Example 1, and it was almost completed in about 8 minutes. The volume of the recovered liquid component was slightly greater than in Example 1, and it was 1.9 ml. This result is also shown in Table 1.

### <Example 3>

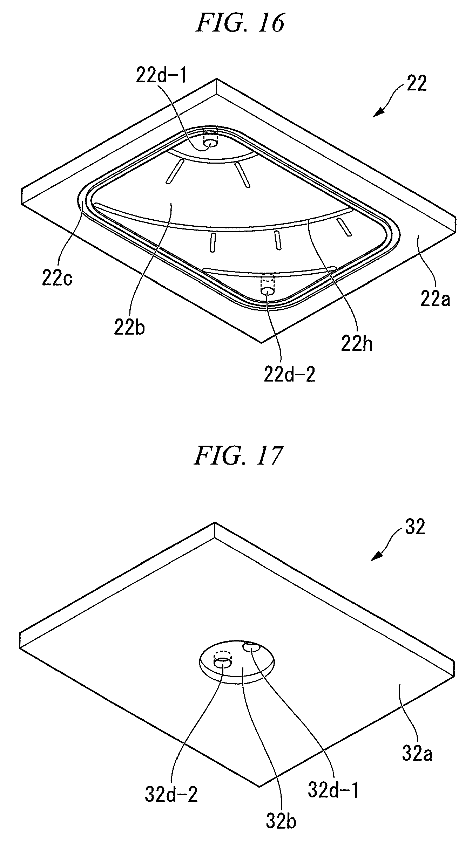

In the manufacturing of the fluid device 1 of Example 2, the same plasma separation procedure was carried out as in Example 2 except for using the upper plate 22 shown in FIG. 16.

The squared recess 22b having the depth of 0.8 mm with rounded corners was formed at lower surface 22a of the upper plate 22, and the groove 22c of the depth of 1.3 mm was provided around the outside of the recess 22b. The through holes 22d-1, 22d-2 were opened one by one in the vicinity of two facing corners at the ceiling surface (the bottom surface) of the recess 22b. In addition, as shown in FIG. 16, the convex pattern 22h for controlling the flow of blood was provided at the ceiling surface of the recess of 22b. The pattern 22h is the line shape having the width of 0.5 mm protruded approximately 0.2 mm from the ceiling surface. It is arranged so that blood is spread entirely over the recess 22b from the first through hole 22d-1 (blood introduction hole) by the pattern 22h combining arc and radial line (straight line), and led to the second through hole 22d-2 (air vent hole). The fluid device 1 was manufactured in the same manner with regard to the others as in Example 2.

In the same manner as Example 2, the membrane 5 was moistened by introducing PBS to the fluid device 1, the air was evacuated from the tube 8, and the thin film 6 was closely stuck to the membrane 5.

3 ml of whole blood supplied with the anticoagulant was introduced into the first space 2z of the upper plate 2 of the fluid device 1. As a result, the blood was developed along the pattern 22h that is attached to the ceiling surface of the upper plate 2, and smoothly spread entirely over the first space part 2z. Since it was able to control the flow of the blood and discharge of the air by the pattern 22h, the amount of the remaining air in the first space part 2z was smaller than Examples 1 and 2.

In the same manner as Example 2, it was possible to recover the liquid component containing plasma from silicone tube 8. The time required from the introduction of blood to the recovery of the liquid component was less than Examples 1 and 2, and it was about 7 minutes. The volume of the recovered liquid component was 2.0 ml. Hemolysis did not occur, and there was no contamination of the blood cells in the liquid component. This result is also shown in Table 1.

The filtration proceeded efficiently since the air was efficiently discharged from the membrane 5 over the first space part 2z when blood was introduced, and the residual air was small. Therefore, the volume of blood remaining in the first space part 2z was less than Example 1, and it was possible to filtrate almost all of the blood.

**[Table 1]**

| <Ratio of plasma recovered from the fluid device, introduced with blood> | | | | | | |
|---|---|---|---|---|---|---|
| | Introduced liquid (ml) | | | Recovered liquid component | | |
| | PBS | Blood | Amount of plasma in blood | Amount of obtained liquid (ml) | Recovery rate (%) | Recovery rate of plasma (%) |
| Example 1 | 0.7 | 3.0 | 1.65 | 1.7 | 72.3 | 60.6 |
| Example 2 | 0.7 | 3.0 | 1.65 | 1.9 | 80.9 | 72.7 |
| Example 3 | 0.7 | 3.0 | 1.65 | 2.0 | 85.1 | 78.8 |

### <Comparative Example 1>

In the manufacturing of the fluid device 1 of Example 1, the fluid device was prepared in the same manner as Example 1 except that the thin film 6 at the lower surface of the membrane 5 was not used, and only the membrane 5 was arranged in the fluid device. In the same manner as Example 1, after moistening the membrane 5 by introducing 0.7 ml of PBS to the fluid device, 3 ml of blood supplied with the anticoagulant was introduced.

Although the blood on the membrane 5 was slightly absorbed by the membrane 5, most of the blood continued to remain on the membrane 5, and the liquid component containing plasma did not fall from the lower surface of the membrane 5.

Although the negative pressure was applied to the second space part 3z of the lower plate by aspirating the second end of the silicone tube 8, it was not possible to pull the plasma under the membrane 5, and it was not able to recover the liquid component containing plasma. Accordingly, when further strong negative pressure was applied, red colored liquid came out from the lower surface of the membrane 5. Erythrocytes and hemolyzed components were mixed in this liquid. Furthermore, although the first space part 2z of the upper plate of the fluid device was pressurized by using the syringe pump, it was able to hardly push out the liquid component containing the plasma to the lower surface of the membrane 5. By this pressure, the shape of the membrane 5 was deformed and dented, and puddle of blood was formed on the membrane 5.

### <Comparative Example 2>

In the manufacturing of the fluid device 1 of Example 1, the fluid device was prepared in the same manner as Example 1 except that the relatively rigid flat plate of resin having the thickness of 2 mm (hereinafter referred to as the resin plate) was arranged in contact instead of the thin film 6 arranged at the lower surface of the membrane 5. In order to install the tube 8, the resin plate was cut to form the groove, and the tube 8 was fitted into the groove.

When blood was introduced into the fluid device in the same manner as Example 1, the liquid component containing plasma immersed out to the gap between the resin plate and the membrane 5. However, even by applying the negative pressure to the tube 8, it was difficult to recover the liquid component. When applying the negative pressure to the tube 8, although it was able to take small amount of the liquid component, the resin plate was strongly stuck to the lower surface of the membrane 5 by the effect of negative pressure, thereby preventing that the liquid component immersed out to the lower surface of the membrane 5. Accordingly, the filtration process did not proceed, and it was not possible to complete the filtration process even spending a long time.

In addition, although gradually coming out of the liquid component was waited without applying the negative pressure to the tube 8, even over a period of 20 minutes, the accumulated blood was remained at the upper part of the membrane 5.

### <Example 4: Measurement of the blood filtration speed of the membrane>

### [Manufacturing of the experimental apparatus]

The upper plate 32 shown in FIG. 17 was prepared. By cutting the cylindrical recess 32b having the diameter of 2 cm at the center of the lower surface 32a of the upper plate 32, the first through hole 32d-1 (blood introducing hole) and the second through hole 32d-2 (air vent hole) were provided in the recess 32b. In addition, the lower plate (not shown) was prepared in which the cylinder having the diameter of 1.6 cm and capable of fitting into the recess 32b was provided at the upper surface.

The same membrane as the membrane used in Example 1 was prepared. This membrane was formed into the larger circle than the bottom surface of the cylindrical recess 32b, and stuck so as to cover the recess 32b to the lower surface 32a. The upper plate 32 with the lower surface 32a placed downward was fixed to the stand type of jig. In addition, the lower plate was placed on the vertically movable stage and fixed on the stage at the position where the cylinder of the lower plate overlaps to the cylindrical recess 32b of the upper plate.

### [Measurement of the descending speed of the lower plate]

The stage was raised to the position where the upper surface of the cylinder of the lower plate is in contact with the membrane of the upper plate, and its height was set as the origin. Then, the lower plate was lowered 5 mm from the origin.

Blood supplied with the anticoagulant was introduced from the blood introduction hole, and the recess 32b of the upper plate was filled with the blood. In this case, the blood introducing hole and the air vent hole were also filled with blood. The case was in a state in which blood was penetrating to the membrane, but did not drip from the membrane.

After the stage carrying the lower plate was raised and the upper surface of the cylinder of the lower plate was in contact with the membrane, the stage was descended at a constant speed. With this descent, the filtration was promoted, and plasma was drawn to the gap between the membrane and the cylinder. The amount of blood that was filtered from the cylindrical space of the upper plate to under the membrane was measured every two minutes. This measurement was carried out by measuring the amount of blood required for filling again the cylindrical space of the upper plate with blood.

As the result of observing from the side during the descent of the stage, the space between the lower surface of the membrane and the cylinder was filled with plasma, and the liquid reservoir had become columnar by the surface tension. In this case, when the lowering speed of the stage was fast, the supply (filtration) of plasma from the lower surface of the membrane could not kept with, and the column of plasma became in a state in which it was thinner than the cylinder of the lower plate. For this reason, the descent of the lower plate was paused in the case that the diameter of the column of plasma became to 2/3 or less of the diameter of the cylinder of the lower plate. Then, after waiting until the diameter of the column of plasma became the similar thickness to the cylinder of the lower plate, the descent was resumed again. The experiment was terminated when the reduction of the blood of the upper plate had almost disappeared, and as the result of observing after lowering the lower stage, the lower plate was in a state in which plasma was accumulated on the cylinder of the lower plate.

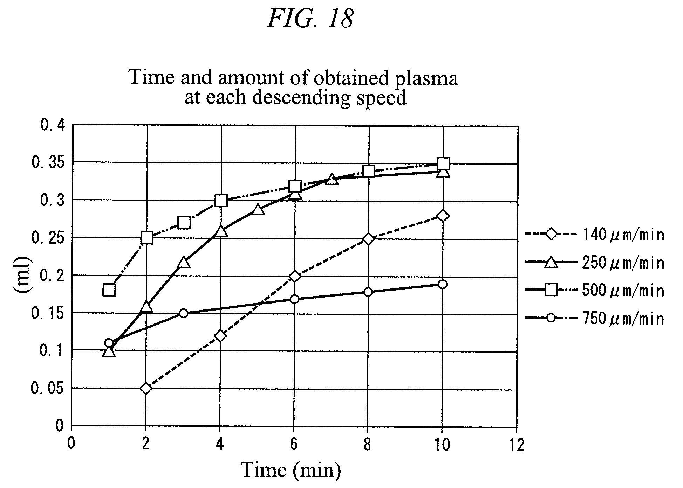

The relationship between the descending speed of the structural material (the cylinder of the lower plate) and the amount of obtained plasma in this experiment is shown in the graph of FIG. 18. It should be noted that, in the experiments of the descending speed of 500 µm/min and 750 µm/min in the graph, since the column of plasma was thinned, the descent was paused in the middle.

From this graph, when the structural member is abutted to the lower surface of the membrane for separating plasma (manufactured by Nihon Pall Ltd. "Vivid plasma separation membrane" GR grade) and blood is filtrated while lowering the structural material, it can be said that the descending speed of the structural material is preferably 250 µm/min or more and less than 500 µm/min.

### INDUSTRIAL APPLICABILITY

According to the present invention, it is possible to obtain the analyte in which the contamination of the unwanted contaminants has been reduced from a sample such as blood. Therefore, the present invention is industrially useful.

### Explanation of reference

1 ... fluid device, S ... sample, 2 ... upper plate, 2a ... lower surface of the upper plate, 2b ... recess, 2c ... groove, 2d ... through hole, 2z ... first space part, 3 ... lower plate, 3a... upper surface of the lower plate, 3b ... recess, 3c ... groove, 3d ... through hole, 3e ... step portion, 3f... cut (groove), 3z ... second space part, 4 ... separation unit, 5 ... filter, 6 ... structural material, 6z ... filtrate housing portion, 7 ... O-ring, 8 ... tube, W ... liquid pool, Pg ... gas pressure, PI... liquid pressure, 5 ... surface tension of the liquid, θ ... contact angle of the liquid to the capillary wall, d₁ ... pore diameter, g ... gravity on the liquid in the capillary and placed on upward of the capillary, d₂'... gap (distance of the gap), d₂"... gap (distance of the gap), L ... displacement amount, 12 ... upper plate, 12a ... lower surface of the upper plate, 12b ... recess, 12c ... groove, 12d ... through hole, 13 ... lower plate, 13a ... upper surface of the lower plate, 13b ... recess, 13c ... groove, 13d ... through hole, 13e ... step portion, 13f... cut (groove), 13g ... support pillar, 22 ... upper plate, 22a... lower surface of the upper plate, 22b ... recess, 22c ... groove, 22d-1 ... first through hole (blood introducing hole), 22d-2 ... second through hole (air vent hole), 22h... convex pattern, 32 ... upper plate, 32a ... lower surface of the upper plate, 32b ... recess, 32d-1 ... blood introducing hole, 32d-2 ... air vent hole, 51 ... composite fluid device, 52 ... exosome purification portion, 52a... cleaning liquid introducing inlet, 52b ... sample introducing inlet, 52c ... disrupting solution introducing inlet, 52d ... exosome fixing portion, 52e ... valve, 52f... valve, 52g ... valve, 52h... flow path, 52i ... flow path, 52j ... flow path, 53 ... biomolecule purification portion, 53a ... biomolecule cleaning liquid introducing inlet, 53b ... biomolecule recovery solution introducing inlet, 53c ... biomolecule fixing portion, 53d ... valve, 53e ... flow path, 53f... valve, 53g ... flow path, 54 ... biomolecule detection portion, 54a ... detection probe introducing inlet, 54b ... cleaning liquid introducing inlet, 54c ... substrate, 54d ... valve, 54e ... valve, 55 ... second flow path, 55a... valve, 56 ... third flow path, 57 ... waste liquid tank, 58 ... waste liquid tank, 59 ... waste liquid tank, 60 ... fourth flow path, 60a... valve, 61 ... fifth flow path, 61a ... valve, 62 ... sixth flow path, 62a ... valve, 71 ... preprocessing portion, 72 ... first flow path

## Claims

1. A separation unit comprising:
a filter for selectively filtering an analyte from a sample, and
a structural material movably arranged on a secondary side of the filter so that filtration is promoted while maintaining contact with the analyte to be filtered from the filter.

2. The separation unit according to claim 1, wherein the structural material is arranged to be lowered by a load of the analyte to be filtered by the filter.

3. The separation unit according to claim 1 or 2, wherein structural material has deflectibility.

4. The separation unit according to any one of claims 1 to 3, wherein the structural material covers the secondary side of the filter, the structural material has deflectibility so that it moves away from the secondary side of the filter as the analyte is filtrated, and the structural material has a water impermeability.

5. The separation unit according to any one of claims 1 to 4, wherein a constitution material of the structural material is a synthetic resin.

6. The separation unit according to any one of claims 1 to 5, wherein the structural material is a thin film material, sheet, or film, made of synthetic resin.

7. The separation unit according to any one of claims 1 to 6, wherein a thickness of the structural material is 1.0 µm to 100 µm.

8. The separation unit according to any one of claims 1 to 7, wherein a tensile elastic modulus of the structural material is 10 MPa to 4000 MPa.

9. The separation unit according to any one of claims 6 to 8, wherein a surface of the thin film material, sheet, or film is roughened.

10. The separation unit according to claim 9, wherein a roughening process is creasing, embossing, or pleating.

11. The separation unit according to any one of claims 1 to 10, wherein a pore size of pores constituting the filter is gradually decreased from a primary side toward a secondary side, and asymmetric in design.

12. The separation unit according to any one of claims 1 to 11, wherein the sample is blood, and the analyte is plasma.

13. A fluid device comprising:
an inlet for sample introduction,
a filter for selectively filtering an analyte from a sample,
a structural material movably arranged on a secondary side of the filter so that filtration is promoted while maintaining contact with the analyte to be filtered from the filter, and
an outlet for discharging a sample, which communicates with a gap between the filter and the structural material.

14. The fluid device according to claim 13, further comprising: a housing which forms a first space part into which the sample can be injected at a primary side of the filter, and forms a second space part independently from the first space part which accommodates the structural material at the secondary side of the filter.

15. The fluid device according to claim 14, wherein the structural material covers the secondary side of the filter, a peripheral portion of the structural material is fixed to a peripheral portion of a secondary side of the filter, and a central portion of the structural material is movably arranged from the secondary side of the filter to the housing constituting the second space part, so that a filtrate housing portion which is variable in volume is formed between the structural material and a surface of the secondary side of the filter.

16. The fluid device according to claim 15, wherein the outlet comprises a tube communicating with the filtrate housing portion.

17. The fluid device according to any one of claims 14 to 16, wherein the outlet is provided on the same level as the surface of the secondary side of the filter in the housing.

18. The fluid device according to any one of claims 14 to 16, wherein the outlet is provided below the surface of the secondary side of the filter in the housing.

19. The fluid device according to any one of claims 14 to 18, wherein the housing comprises:
a lid forming the first space part and provided with a concave portion that covers the primary side the filter, and
a bottom forming the second space part and provided with a concave portion that covers the secondary side of the filter and the structural material.

20. The fluid device according to any one of claims 13 to 19, wherein the sample is blood, and the analyte is plasma.

21. A separation method comprising:
using the separation unit according to any one of claims 1 to 12 or the fluid device according to any one of claims 13 to 19, and
obtaining a liquid component by separating a solid component from a sample containing the liquid component and the solid component.

22. A separation method comprising:
a step of supplying a sample containing a liquid component and a solid component to a primary side of a filter for selectively filtering the liquid component from the sample, and
a step comprising:
having the liquid component soaked into an inside of the filter by capillary action, and contacting the liquid component that has reached a secondary side of the filter with a structural material which is in contact with or close to the secondary side of the filter,
expanding a volume of a gap between the filter and the structural material by pressing down the structural material by the liquid component flowed out from the secondary side during gradually filtering the sample supplied from the primary side by the filter, and
continuing the capillary action by the pressed down structural material via a filtered liquid component.

23. The separation method according to claim 21 or 22, wherein a speed at which a distance between a surface of the secondary side of the filter and the structural material is expanded is a filtration speed per unit area of the filter or less.

24. The separation method according to claim 21 or 22, wherein a speed at which a distance between a surface of the secondary side of the filter and the structural material is expanded and a filtration speed per unit area of the filter have a positive correlation.

25. The separation method according to any one of claims 22 to 24, further comprising a step of discharging the filtered liquid component out of the gap.

26. The separation method according to any one of claims 22 to 25, further comprising a step of deflating a space between the filter and the structural material before supplying the sample.

27. The separation method according to any one of claims 22 to 26, further comprising a step of reducing a pressure of the gap after the volume of the gap is expanded.

28. The separation method according to any one of claims 22 to 27, further comprising a step of impregnating the filter with liquid in advance before supplying the sample to the primary side of the filter.

29. The separation method according to any one of claims 21 to 28, wherein the liquid component is plasma constituting blood, and the solid component is blood cell constituting the blood.

30. A kit comprising the separation unit according to any one of claims 1 to 12, and a liquid contained in a filter provided in the separation unit.

31. A composite fluid device for detecting a biomolecule contained in an exosome in plasma obtained from a sample containing blood by separating blood cells using the separating unit according to any one of claims 1 to 12 or the fluid device according to any one of claims 13 to 20 comprising:
a preprocessing portion having the separation unit or the fluid device,
an exosome purification portion having a layer modified with a compound having a hydrophobic chain and a hydrophilic chain, and
a biomolecule detection portion.

32. A separation unit comprising:
a filter which selectively filtrates a liquid component from a sample containing a liquid component and a solid component, and
a structural material which is in contact with or close to a secondary side of the filter,
the liquid component being soaked into an inside of the filter by capillary action when the sample is supplied to a primary side,
the structural material being in contact with the liquid component reached an secondary side of the filter,
the filter being pressed down by the liquid component flowing out of the secondary side as the filter gradually filtrate the sample,
a volume of a gap between the filter and the structural material being expanded, and
the capillary action via a filtered liquid component being continued.
